# EUROPÄISCHE PATENTANMELDUNG

(11) **EP 0 888 869 A1**
(43) Veröffentlichungstag der Anmeldung: **07.01.1999**
(21) Anmeldenummer: 98107402.4
(22) Anmeldetag: 23.04.1998
(51) Int. Cl.: B29C 69/00

(54) **Verfahren und Werkzeug zum Spritzgiessen von Gegenständen**

(30) Priorität: 30.06.1997 DE 19727786
(71) Anmelder: Siegfried Hofmann GmbH Werkzeugbau, 96215 Lichtenfels (DE)
(72) Erfinder: Vosswinkel, Friedrich, 96272 Hochstadt (DE)
(74) Vertreter: Reinhard - Skuhra - Weise & Partner

(57) **Zusammenfassung**

Ein Verfahren zum Spritzgießen von Gegenständen, insbesondere von Lamellen für Luftkanäle und Klimaanlagen, aus mindestens zwei gegeneinander beweglichen, miteinander verbundenen Teilen aus Kunststoff oder dergleichen, beinhaltet folgende Schritte:

In mindestens zwei voneinander getrennt in einer Werkzeugform ausgebildeten Formnestern werden Spritzlinge gefertigt, während des Öffnens der Werkzeugform zwischen den Formnestern während des Spritzens liegende Werkzeugteile wie Schieber, Verriegelungs- und Formleiste oder dergleichen werden zur Freigabe eines Raumes zwischen den mindestens zwei Spritzlinge derart verlagert, daß die beiden Spritzlinge innerhalb des Werkzeugs miteinander verbunden werden können,
anschließend wird wenigstens einer der Spritzlinge zur Montage innerhalb des Werkzeugs an den anderen Spritzling herangefahren und an diesem befestigt,
als erster Spritzling wird eine Gruppe von Spritzlingen gespritzt, die in zueinander im wesentlichen paralleler Position zwischen einem düsenseitigen und einem auswerferseitigen Formeinsatz hergestellt werden,
bei dem seitlich zur Gruppe der ersten Spritzlinge wird mindestens ein weiterer, zweiter Spritzling in einer zu den ersten Spritzlingen seitlich beabstandeten Position gespritzt.

## Beschreibung

Die Erfindung betrifft ein Verfahren zum Spritzgießen von Gegenständen gemäß dem Oberbegriff des Patentanspruchs 1 sowie ein Werkzeug gemäß dem Oberbegriff des Patentanspruchs 7.

Ein Verfahren und ein Werkzeug gemäß dem Oberbegriff des Patentanspruchs bzw. 7 sind bereits aus der DE 33 40 122 C2 bekannt. Bei diesem Verfahren werden zur Herstellung eines Gegenstandes, bestehend aus mehreren Spritzlingen, zuerst ein erster Spritzling in einem Formnest erzeugt, der nach seiner Fertigstellung aus dem Formnest entnommen und in ein anderes, weiteres Formnest verbracht wird, usw., bis schließlich der aus diesen einzelnen Spritzlingen bestehende Gegenstand fertiggestellt ist. Hierbei ist es notwendig, daß in den aufeinanderfolgenden Spritzvorgängen nach dem Mehrkomponenten-Verfahren gefertigt wird, d.h. daß beispielsweise der erste Spritzling aus einem ersten Material gefertigt wird und der zweite, an den ersten Spritzling anzuspritzende Spritzling aus einem davon unterschiedlichen Material zu spritzen ist, um die Beweglichkeit dieser Teile gegeneinander zu gewährleisten.

Ein wesentlicher Nachteil dieses Verfahrens ist, daß die den Gegenstand ergebenden Spritzlinge nacheinander gefertigt werden unter Umspritzung des jeweils bereits vorher gefertigten Spritzlinges, was zeitlich und herstellungstechnisch außerordentlich aufwendig ist infolge der wiederholten Entnahme von Spritzlingen und dem Einlegen der Spritzlinge in ein anderes Formnest. Weiter nachteilig ist, daß bei diesem Verfahren zwangsweise in den aufeinanderfolgenden Spritzvorgängen unterschiedliche Materialien verwendet werden müssen, um die Beweglichkeit der Einzelteile zu gewährleisten.

Eine weitere Möglichkeit der Herstellung von Gegenständen, beispielsweise lamellenartig aufgebauter Strömungsdüsen, besteht darin, daß die Einzelteile einzeln durch Formwerkzeuge hergestellt und anschließend zu dem Endprodukt zusammenmontiert werden. Nachteilig bei dieser Herstellungsmethode ist die aufwendige Lagerhaltung von Einzelteilen und die notwendige Bereitstellung von mehreren Formwerkzeugen.

Der Erfindung liegt daher die Aufgabe zugrunde, ein verfahren zum Spritzgießen von Gegenständen sowie ein Werkzeug zum Spritzgießen von Gegenständen derart zu verbessern, daß die Zahl der Herstellungsschritte auf ein Minimum reduziert und damit die Herstellung insgesamt effektiver gestaltet werden kann.

Diese Aufgabe wird bei einem Verfahren zum Spritzgießen von Gegenständen durch die im Patentanspruch 1 angegebenen Merkmale gelöst und bei einem Werkzeug zum Spritzgießen von Gegenständen durch die im Patentanspruch 7 angegebenen Merkmale.

Weitere Ausgestaltungen des erfindungsgemäßen Verfahrens und des Werkzeugs ergeben sich aus den Unteransprüchen.

Die Erfindung schafft ein Verfahren zum Spritzgießen von Gegenständen, insbesondere von Lamelleneinheiten für Luftkanäle und Klimaanlagen, bei dem die die Lamelleneinheiten für Luftkanäle und Klimaanlagen ergebenden Einzelteile in einem gemeinsamen Verfahrensschritt und in einem gemeinsamen Werkzeug gleichzeitig hergestellt werden, d.h. die Einzelteile werden als einzelne Spritzlinge gefertigt. Anschließend wird das Werkzeug geöffnet und die Spritzlinge können zu dem Endprodukt in ein und dem gleichen Werkzeug automatisch zusammengebaut werden, d.h. es entfällt jegliche manuelle Arbeit.

Bei dem erfindungsgemäßen Verfahren können vorteilhafterweise die einzelnen Spritzlinge aus jeweils dem gleichen Material, insbesondere Kunststoffmaterial, gefertigt werden. Im Bedarfsfall können aber auch unterschiedliche Kunststoffe für die einzelnen Spritzlinge verwendet werden. Das Verfahren ist damit nicht darauf beschränkt, daß die zueinander beweglich verbundenen Teile aus verschiedenartigen Kunststoffen bestehen müssen.

Nachfolgend wird eine bevorzugte Ausführungsform des erfindungsgemäßen Verfahrens sowie eine bevorzugte Ausführungsform des erfindungsgemäßen Werkzeugs zur Beschreibung weiterer Merkmale anhand der Zeichnungen näher erläutert. Es zeigen:
- Fig. 1: eine perspektivische Ansicht einer Lamellendüse als Beispiel eines nach dem erfindungsgemäßen Verfahren herzustellenden Gegenstandes,
- Fig. 2: eine Rückseitenansicht der Lamellendüse entsprechend Fig. 1,
- Fig. 3: eine Schnittansicht durch ein Werkzeug zum Spritzgießen von Gegenständen, im geschlossenen Zustand,
- Fig. 4: eine Teildarstellung des Werkzeugs entsprechend Fig. 3, nach dem ersten Öffnungsschritt,
- Fig. 5: eine Fig. 4 entsprechende Darstellung des Werkzeugs nach einem zweiten Öffnungsschritt,
- Fig. 6: eine Fig. 4 entsprechende Darstellung des Werkzeugs zur Erläuterung der Montage des fertigen Gegenstandes, und
- Fig. 7: eine schematische Darstellung eines Schiebers für außenliegende Teile.

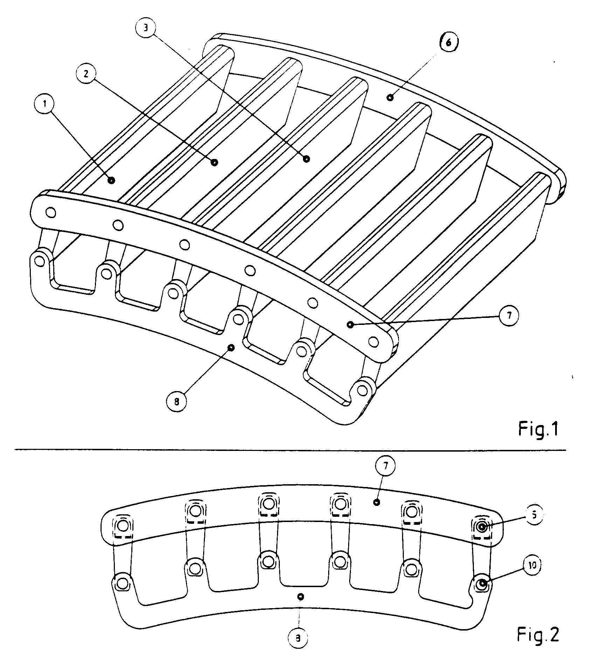

Fig. 1 zeigt lediglich als Beispiel eine aus Kunststoff gefertigte Lamellendüse, die aus mehreren, parallel zueinander beweglich gelagerten Einzellamellen 1, 2, 3 usw. besteht. Jede Lamelle 1, 2, 3 weist beidseitig Lagerzapfen 4, 5 auf, von welchen nur die Lagerzapfen 4 und 5 der ersten Lamelle 1 in Fig. 1 angedeutet sind. Die Lagerzapfen 4, 5 stehen über die jeweilige Lamelle 1 seitlich vor und sind durch eine gemeinsame Drehachse definiert. Die Lamellen 1, 2, 3 werden durch zwei zueinander parallel verlaufende Lagerstangen 6, 7 drehfähig gelagert, wobei die Lagerstangen 6, 7 quer zu den einzelnen Lamellen 1, 2, 3 und parallel zueinander vorgesehen sind. Gemäß Fig. 1 sind die Lagerstangen 6, 7 bogenförmig gestaltet. Die Lamellen 1, 2, 3 sind durch die Lagerzapfen 4, 5 drehfähig gegenüber den Lagerstangen 6, 7 angeordnet und werden zur Durchführung einer zueinander parallelen Bewegung über eine Betätigungsstange 8 gesteuert. Die einzelnen Lamellen 1, 2, 3 sind an ihrem unteren Ende auf einer Stirnseite mit Steuerzapfen 10 versehen. Fig. 2 zeigt lediglich den Steuerzapfen 10 hinsichtlich der Lamelle 1. Damit wird erreicht, daß bei einer Bewegung der Betätigungsstange 8 die Lamellen um die durch die Lagerzapfen 4, 5 usw. definierten Drehachsen entsprechend der Bewegung der Betätigungsstange 8 verstellt werden. Auf diese Weise kann die Luftströmung richtungsmäßig und auch volumenmäßig gesteuert werden, die durch die parallel zueinander liegenden Lamellen 1, 2, 3 hindurchgeführt wird. Derartige Lamellendüsen werden beispielsweise in Kraftfahrzeugen eingesetzt.

Wie sich aus vorstehender Beschreibung ergibt, besteht die als Beispiel gezeigte Lamellendüse aus einer Vielzahl von Lamellen 1, 2, 3, weiterhin aus den Lagerstangen 6, 7 und der Betätigungsstange 8, d.h. zusätzlich zu den Lamellen 1, 2, 3 sind noch weitere drei Einzelteile bei der dargestellten Ausführungsform erforderlich.

Das erfindungsgemäße Verfahren und das hierzu erforderliche Werkzeug sind derart konzipiert, daß innerhalb eines einzigen Formwerkzeuges mehrere Formnester vorgesehen sind, die derart beabstandet sind, daß die einzelnen Lamellen 1, 2, 3 usw. in einer vorgegebenen Stellung gleichzeitig gespritzt werden können. Seitlich und in Abstand zu den Formnestern für die Lamellen 1, 2, 3 usw. befinden sich weitere Formnester, nämlich einmal für einen Spritzling entsprechend der Lagerstange 6, auf der anderen Seite befinden sich Formnester für die Lagerstange 7 sowie für die Betätigungsstange 8. Bei dem erfindungsgemäßen Verfahren werden somit die Einzelteile, nämlich die Lamellen 1, 2, 3 einerseits sowie die Lagerstangen 6, 7 und die Betätigungsstange 8 andererseits gleichzeitig gespritzt, wonach dann das Werkzeug geöffnet wird, derart, daß die Lagerstange 7 und die Betätigungsstange 8 von der einen Seite und die Lagerstange 6 von der anderen Seite auf die Lamellen 1, 2 usw. hinzubewegt werden und gegenüber den Lamellen 1, 2, 3 fest auf diese aufgesetzt werden können. Hierbei können die Stangen 7, 8 einerseits und die Stange 6 andererseits synchron, aber auch asynchron miteinander auf die Lamellen 1, 2, 3 zu bewegt werden.

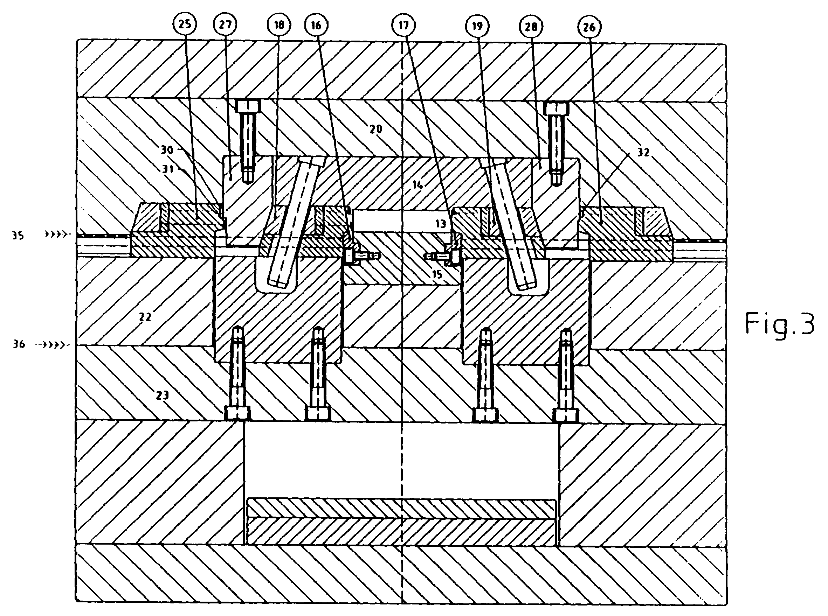

Das erfindungsgemäße Verfahren und das erfindungsgemäße Werkzeug werden nachfolgend unter Bezugnahme auf die Fig. 3 bis 7 näher erläutert. Es sei ausdrücklich darauf hingewiesen, daß der unter Bezugnahme auf Fig. 1 und 2 gezeigte Gegenstand nur als Beispiel anzusehen ist und damit die Erfindung nicht auf diesen Gegenstand und auf die in Verbindung mit diesem Gegenstand beschriebenen Einzelteile beschränkt ist.

Fig. 3 zeigt eine Schnittansicht durch das erfindungsgemäße Werkzeug im geschlossenen Zustand. In der Mitte des Werkzeugs gemaß Fig. 3 befinden sich mehrere parallel und hintereinander liegende Formnester 13 für die Lamellen 1, 2, 3, wobei diese Formnester zwischen einem düsenseitigen Formeinsatz 14 und einem auswerferseitigen Formeinsatz 15 angeordnet sind. Den in den Formnestern 13 gespritzten Lamellen können Justiereinrichtungen 16, 17 zugeordnet sein, beispielsweise in Form von Justierleisten oder in Form von Aussparungen innerhalb der Formnester 13. Gemäß Fig. 3 sind die Justiereinrichtungen 16, 17 durch Justierleisten gebildet, die nach oben abstehen und eine seitliche Bewegung der im Formnest 13 gespritzten Lamelle verhindern, sobald nach dem Öffnen des Werkzeuges mit 18, 19 bezeichnete Schieber die Formnester 13 freigeben.

Der Formeinsatz 14 ist an der unteren Seite einer Formplatte 20 befestigt. Entsprechend ist eine untere Formplatte 22, d.h. eine auswerferseitige Formplatte 22 vorgesehen, sowie eine auswerferseitige Zwischenplatte 23.

Zur Herstellung außenliegender Spritzlinge dient ein Schieber 25, 26, der gemäß Fig. 3 etwa in Höhe der Formnester 13 bzw. in Höhe der Schieber 18, 19 angeordnet ist. Bei der dargestellten Ausführungsform definiert der Schieber 25 zusammen mit einer benachbarten Verriegelungs- und Formleiste 27, 28 zwei Formnester 30, 31. Das Formnest 30 erzeugt als Spritzling die Führungsstange 5 und das Formnest 31 erzeugt als Spritzling die Betätigungsstange 8 gemäß Fig. 2. Der Schieber 26 definiert zusammen mit der Verriegelungs- und Formleiste 28 ein Formnest 32, das als Spritzling die Führungsstange 6 ergibt.

Die Formnester 30, 31, 32 sind höhenmäßig dem Formnest 13 so zugeordnet, daß nach der Herstellung der Spritzlinge eine möglichst exakte Ausrichtung der Teile 6, 7, 8 gegenüber den Lager- und Steuerzapfen 4, 5, 10 erreicht wird. Die Teile 6, 7, 8 sind entsprechend den Lager- und Steuerzapfen 4, 5, 10 mit Bohrungen versehen, die im Verlaufe des Spritzgießvorganges freigehalten werden.

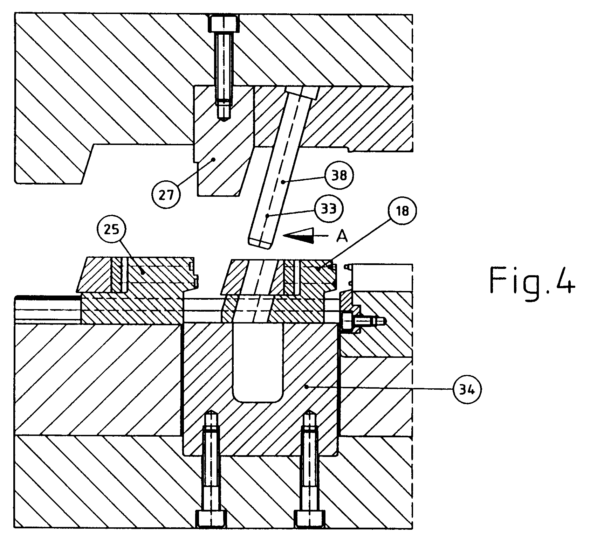

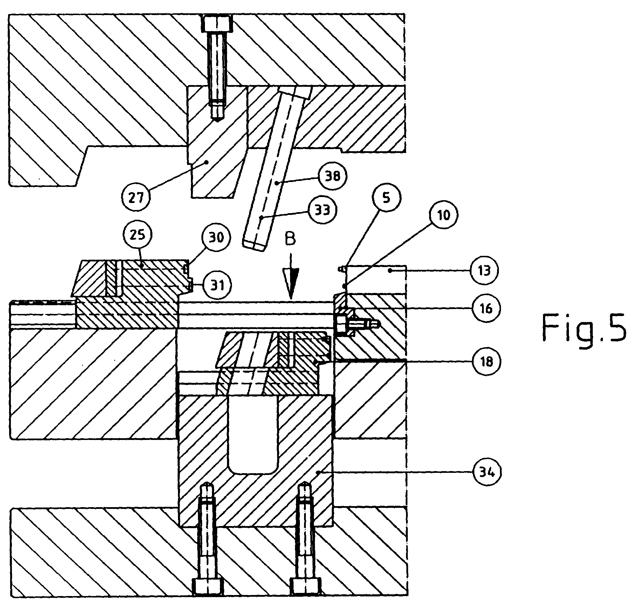

In dem in Fig. 3 gezeigten Zustand des Werkzeuges werden somit die einzelnen Lamellen 1, 2, 3 entsprechend den Formnestern 13 hergestellt und zugleich die Stangen 6, 7, 8 in den Formnestern 32, 30, 31, wobei vorzugsweise das Einkomponenten-Verfahren angewandt wird, d.h. alle Teile aus dem gleichen Kunststoffmaterial gespritzt werden. Nach Beendigung des Spritzvorganges wird das Werkzeug geöffnet, wobei gemäß Fig. 4 die Schieber 18, 19 zuerst eine horizontale Bewegung nach außen gegenüber der Werkzeugmittelachse ausführen, wie dies in Fig. 4 gezeigt ist, um anschließend eine Bewegung in vertikaler Richtung nach unten durchzuführen. Die horizontale Bewegung des Schiebers 18 nach außen ist in Fig. 4 durch einen Pfeil A gezeigt, die vertikale Bewegung des Schiebers 18 nach unten in Fig. 5 durch den Pfeil B.

Beim Öffnen des Werkzeuges wird somit sinngemäß zuerst die Formplatte 20 zusammen mit dem Formeinsatz 14 und entlang einer mit 33 bezeichneten Schrägachse nach oben verlagert, wobei gleichzeitig die jeweiligen Verriegelungs- und Formleisten 27, 28 aus dem Zwischenraum zwischen den Schiebern 18 und 25 bzw. 19 und 26 nach oben entfernt. Zugleich werden die Schieber 18, 19 entsprechend der Pfeilrichtung A seitlich nach außen verlagert, wie dies in Fig. 4 gezeigt ist. Schließlich werden durch die weiterlaufende Werkzeugöffnung, wie in Fig. 5 gezeigt, die Schieber 18, 19 zusammen mit der Schieberführung 34, in Richtung des Pfeiles B nach unten verlagert. Auf diese Weise wird der Bewegungsweg für den Schieber 25 (und 26) in einer zum Pfeil A entgegengesetzten Richtung frei, d.h. es können beispielsweise die in den Formnestern 30, 31 befindlichen Spritzlinge an die in den Formnestern 13 gespritzten Spritzlinge von der Seite herangeführt werden.

Der erste Öffnungsschritt des Werkzeuges aus dem in Fig. 3 gezeigten Zustand bewirkt somit die Öffnung der Form entlang einer Trennfläche 35, die sich im wesentlicher, aus der Darstellung nach Fig. 4 ergibt, d.h. zwischen der Formplatte 20 und 22 über den Schieber 25 und 18 weiter entlang der unteren Fläche des Formeinsatzes 14 verläuft. Der zweite Öffnungsschritt bewirkt eine Trennung im Bereich der Trennfläche 36, die in Fig. 3 angedeutet ist.

Nach einer Verlagerung des in Fig. 5 bezeichneten Schiebers 25 in Richtung auf das in Fig. 5 mit 13' angegebene Spritzteil in Form einer Lamelle werden die in den Formnestern 30, 31 liegenden Stangen 7, 8 seitlich auf die entsprechenden Zapfen 5, 10 der Lamellen 13' aufgedrückt, wobei vorzugsweise jeder Schieber 25, 26 einen in den Fig. 3 bis 5 nicht weiter dargestellten Ausdrückmechanismus enthält, um sicherzustellen, daß die Stangen 7, 8 an den Lamellen 13' verbleiben, wenn der Schieber 25 bzw. 26 in die in Fig. 5 gezeigte Position zurückgefahren wird.

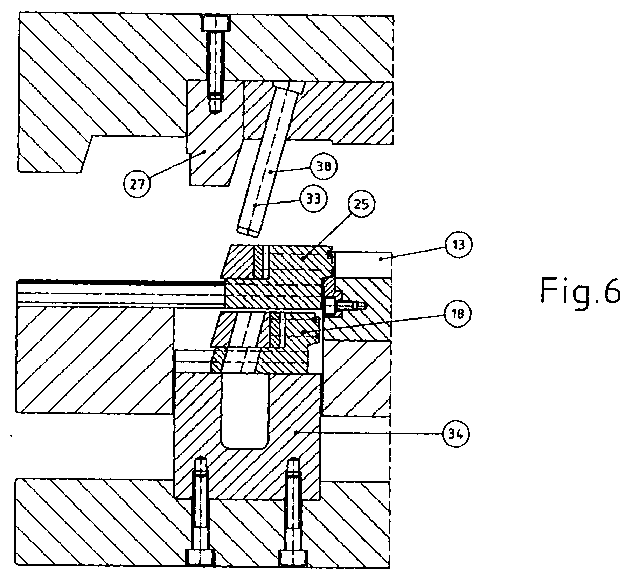

Fig. 6 zeigt die Stellung des Schiebers 25, in welcher die Stangen 7, 8 an die Lamellen 13' aufgesetzt werden. Um die Bewegung des Schiebers 25, 26 entsprechend Fig. 6 zu ermöglichen, sind entsprechende Führungs- und Bestätigungsmechanismen vorgesehen.

Sobald der Schieber 25 bzw. 26 in die in Fig. 5 gezeigte Position zurückbewegt ist, wird das Endprodukt in Form von Lamellendüsen aus dem Werkzeug durch nicht weiter dargestellte Einrichtungen ausgeworfen.

Aus vorstehender Beschreibung ist ersichtlich, daß die Verriegelungs- und Formleiste 27, 28 an der zugehörigen Hälfte der düsenseitigen Formplatte 20 befestigt bzw. angeschraubt ist und der düsenseitige Formeinsatz 14 einen die Schrägachse 33 definierenden Bolzen 38 trägt, welcher die seitliche Bewegung der Schieber 25, 26 beim ersten Öffnungsschritt des Werkzeuges herbeiführt.

Die Schieberführung 34 für den Schieber 18 bzw. 19 ist durch in den Zeichnungen angedeutete Schraubbolzen mit der auswerferseitigen Zwischenplatte 23 fest verbunden.

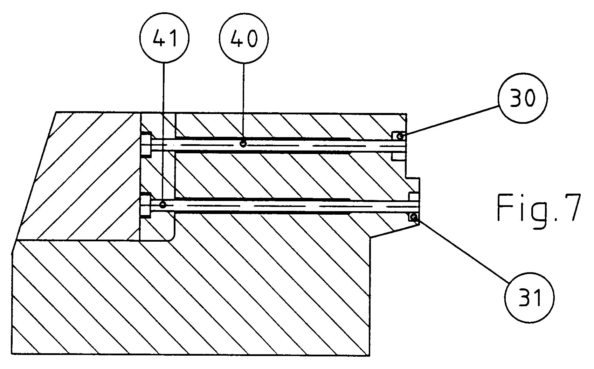

Fig. 7 zeigt eine schematische Schnittansicht eines Schiebers 25 mit den Formnestern 30, 31. Der Schieber 25 enthält gemäß Fig. 7 Stifte 40, 41, die dafür sorgen, daß während des Spritzvorganges in den Formnestern 30, 31 an vorgegebenen Stellen die in den Stangen 7, 8 erforderlichen Bohrungen freigehalten werden. Weiterhin enthält jeder Schieber 25, 26 vorzugsweise eine nicht weiter dargestellte Ausdrückvorrichtung, um nach Erzeugung der Spritzlinge in den Formnestern 30, 31 dieselben aus den Formnestern 30, 31 herauszustoßen, wenn der Schieber 25 die in Fig. 6 gezeigte Position seitlich der einzelnen Lamellen 1, 2, 3 entsprechend dem Bezugszeichen 30' eingenommen hat.

Wie beschrieben, ist die Zahl der Formnester 30, 31, 32 in den Schiebern 25, 26 auf den jeweiligen Bedarfsfall abgestellt. Wesentlich ist jedoch, daß bei der dargestellten Ausführungsform die Formnester 30, 31 auf die Lager- und Führungszapfen 5, 10 entsprechend Fig. 5 höhenmäßig ausgerichtet sind, um ein exaktes Aufsetzen der Stangen 7, 8 auf die Lamellen 13' vornehmen zu können.

Durch die Verwendung der in den Fig. 3 bis 6 gezeigten Justiereinrichtungen bzw. Justierleisten 16, 17 kann gemäß Fig. 5 ein eventuelles ungleichmäßiges Heranführen der Schieber 25, 26 an die Lamellen 13 ausgeglichen werden, um die Stangen 7, 8 an den Lamellen 13' zu befestigen.

Die Erfindung betrifft somit ein Verfahren zum Spritzgießen von Gegenständen aus mindestens zwei selbständigen, unlösbar oder lösbar und gegeneinander beweglich verbundenen Teilen aus gleichen oder auch unterschiedlichen Kunststoffen. Wesentlich ist, daß zumindest ein erstes Spritzteil und ein seitlich hierzu in einem beabstandeten Formnest liegendes zweites Spritzteil gefertigt werden, wobei das Spritzgießen der beiden Spritzteile gleichzeitig erfolgt, wonach dann das Werkzeug geöffnet wird und die zwischen den Spritzteilen befindlichen Schieber-, Verriegelungs- und Formleisten aus dem Raum zwischen den beiden Spritzlingen entfernt werden, um dann zumindest einen der beiden Spritzlinge in Richtung auf den anderen Spritzling bewegten und an diesem montieren zu können. In Bezug auf das Werkzeug nach Fig. 3 bedeutet dies, daß zumindest ein Formnest 13, oder vorzugsweise eine Gruppe von hintereinanderlegenden, beabstandeten Formnestern 13 zur Festlegung eines ersten Spritzlings oder einer ersten Gruppe von Spritzlingen definiert wird, sowie mindestens ein seitlich davon beabstandetes Formnest für mindestens einen zweiten Spritzling entsprechend den Formnestern 30, 31, daß die Spritzlinge gleichzeitig gespritzt werden und dann nach der Verlagerung der Verriegelungs- und Formleiste 27 während des Öffnens des Werkzeuges und nach einer Entfernung des Schiebers 18 der Raum zwischen den Spritzlingen 13' und einem Spritzling im Formnest 30 bzw. 31 soweit geöffnet wird, daß der Schieber 25 mit mindestens einem Spritzling in Richtung auf den Spritzling 13' verschoben werden kann. Dann wird der zweite Spritzling an dem ersten Spritzling 13' befestigt.

Ein Verfahren, das das in Bezug auf die Fig. 1 bis 7 beschriebene Werkzeug verwendet, dient zum Spritzgießen von Gegenständen, insbesondere Lamellen für Luftkanäle und Klimaanlagen, die aus einer Gruppe von Lamellen als ersten Spritzlingen und drei weiteren Spritzlingen besteht in Form der Stangen 6, 7, 8, wobei die Lamellen 1, 2, 3 gegenüber den Stangen 6, 7 drehbeweglich und die Lamellen 1, 2 in gewissem Sinne auch gegenüber den in der Stange 8 befindlichen Bohrungen drehbeweglich sind. Bei diesem Verfahren werden einerseits in einer Gruppe von Formnestern die Lamellen und hiervon getrennt in weiteren Formnestern weitere Spritzlinge gefertigt.

Während des Öffnens des Werkzeuges werden zwischen den Formnestern für die Lamellen einerseits und den Formnestern für die Stangen andererseits liegende Teile des Werkzeugs wie Schieber und Verriegelungs- und Formleisten zur Freigabe eines Raumes zwischen den Spritzlingen in Form der Lamellen einerseits und den Spritzlingen in Form der Stangen andererseits verlagert, wonach die seitlich zu den Lamellen gespritzten Spritzlinge an die Lamellen heranbewegt werden und innerhalb des Werkzeugs an den Lamellen befestigt werden.

## Patentansprüche

1. Verfahren zum Spritzgießen von Gegenständen, insbesondere von Lamellen für Luftkanäle und Klimaanlagen, aus mindestens zwei gegeneinander beweglichen, miteinander verbundenen Teilen aus Kunststoff oder dergleichen,
bei dem in mindestens zwei voneinander getrennt in einer Werkzeugform ausgebildeten Formnestern Spritzlinge gefertigt werden, während des Öffnens der Werkzeugform zwischen den Formnestern während des Spritzens liegende Werkzeugteile wie Schieber, Verriegelungs- und Formleiste oder dergleichen zur Freigabe eines Raumes zwischen den mindestens zwei Spritzlinge derart verlagert werden, daß die beiden Spritzlinge innerhalb des Werkzeugs miteinander verbunden werden können, anschließend wenigstens einer der Spritzlinge zur Montage innerhalb des Werkzeugs an den anderen Spritzling herangefahren und an diesem befestigt wird,
wobei als erster Spritzling eine Gruppe von Spritzlingen gespritzt wird, die in zueinander im wesentlichen paralleler Position zwischen einem düsenseitigen und einem auswerferseitigen Formeinsatz hergestellt werden, und bei dem seitlich zur Gruppe der ersten Spritzlinge mindestens ein weiterer, zweiter Spritzling in einer zu den ersten Spritzlingen seitlich beabstandeten Position gespritzt wird.

2. Verfahren nach Anspruch 1,
**dadurch gekennzeichnet,**
daß mindestens ein weiterer Spritzling auf der zum zweiten Spritzling abgewandten Seite der ersten Spritzlinge hergestellt wird.

3. Verfahren nach Anspruch 2,
**dadurch gekennzeichnet,**
daß sämtliche Spritzlinge gleichzeitig hergestellt werden, daß nach dem Spritzgießen der Spritzlinge die zwischen den ersten Spritzlingen und den weiteren Spritzlingen vorhandenen Werkzeugteile durch Öffnen des Werkzeugs unter Bildung eines freien Raumes so verlagert werden, daß die zweiten, dritten usw. Spritzlinge seitlich an die ersten Spritzlinge herangefahren und an den ersten Spritzlingen befestigt werden.

4. Verfahren nach einem der vorangehenden Ansprüche,
**dadurch gekennzeichnet,**
daß die ersten Spritzlinge mit seitlich von ihnen abstehenden Lager- und Steuerzapfen gespritzt werden, während der zweite, dritte usw. Spritzling während des Spritzvorganges entsprechende Bohrungen enthält und daß beim Montieren der zweiten, dritten usw. Spritzlinge an den ersten Spritzlingen die zweiten, dritten usw. Spritzlinge positionsgerecht mit ihren Bohrungen auf die entsprechenden Zapfen der ersten Spritzlinge aufgesteckt werden.

5. Verfahren nach einem der vorangehenden Ansprüche,
**dadurch gekennzeichnet,**
daß die zweiten, dritten usw. Spritzlinge nach dem Öffnen des Werkzeuges seitlich auf die ersten Spritzlinge bewegt werden, wobei die ersten Spritzlinge gegenüber den zweiten, dritten usw. Spritzlingen im wesentlichen in Querlage positioniert sind, bevor die Befestigung der zweiten, dritten usw. Spritzlinge an den ersten Spritzlingen vorgenommen wird.

6. Werkzeug zum Spritzgießen von Gegenständen aus mindestens zwei gegeneinander beweglichen, miteinander verbundenen Teilen aus Kunststoff oder dergleichen, insbesondere zur Durchführung des Verfahrens nach einem der Ansprüche 1 bis 5,
bei dem zwischen einem düsenseitigen Formeinsatz (14) und einem auswerferseitigen Formeinsatz (15) ein erstes Formnest (13) definiert ist,
wobei seitlich des Formnestes (13) Schieber (18, 19) vorgesehen sind,
bei dem seitlich zu und gegenüber dem ersten Formnest (13) mindestens ein weiteres, zweites Formnest (30, 31, 32) ausgebildet ist,
wobei zwischen dem düsenseitigen Formeinsatz (14) und dem auswerferseitigen Formeinsatz (15) mehrere, im wesentlichen gleiche erste Formnester (13) vorgesehen sind,
und die ersten Formnester im wesentlichen parallel und zueinander beabstandet zwischen dem düsenseitigen und auswerferseitigen Formeinsatz angeordnet sind.

7. Werkzeug nach Anspruch 6,
**dadurch gekennzeichnet,**
daS seitlich und in Abstand zu jedem ersten Formnest (13) weitere Schieber (25, 26) zur Festlegung weitere Formnester (30, 31, 32) vorgesehen sind.

8. Werkzeug nach Anspruch 6 oder 7,
**dadurch gekennzeichnet,**
daß die weiteren zweiten, dritten usw. Formnester (30, 31, 32) durch die weiteren Schieber (25, 26) einerseits und Verriegelungs- und Formleisten (27, 28) andererseits festgelegt sind.

9. Werkzeug nach einem der Ansprüche 6 bis 8,
**dadurch gekennzeichnet,**
daß eine Schieberführung (34) für die Schieber (18, 19) seitlich der ersten Formnester (13) vorgesehen ist, um die Schieber (18, 19) nach einer ersten, im wesentlichen horizontal nach außen geführten Bewegung (A) in eine vertikal nach unten geführte Bewegung (B) zu überführen.

10. Werkzeug nach Anspruch 9,
**dadurch gekennzeichnet,**
daß die äußeren Schieber (25, 26) eine Führung zur Verlagerung der Schieber (25, 26) in Richtung auf die in den Formnestern (13) gespritzten Spritzlinge (13') aufweisen.

11. Werkzeug nach einem der Ansprüche 6 bis 10,
**dadurch gekennzeichnet,**
daß die äußeren Schieber (25, 28) in ihre Formnester (30, 31, 32) reichende Freihaltestifte (40, 41) aufweisen.

12. Werkzeug nach einem der Ansprüche 6 bis 11,
**dadurch gekennzeichnet,**
daß jeder Schieber (25, 26) eine Ausdruckvorrichtung zum Herausdrücken der Spritzlinge aus den Formnestern (30, 31, 32) enthält.

13. Werkzeug nach einem der Ansprüche 6 bis 12,
**dadurch gekennzeichnet,**
daß zumindest dem ersten Formnest (13) bzw. der Gruppe von ersten Formnestern (13) eine Justiereinrichtung (16, 17) zugeordnet ist.
